Europäisches Patentamt

European Patent Office

Office européen des brevets

(11) Publication number: **0 193 245**
**A1**

(12) **EUROPEAN PATENT APPLICATION**

(21) Application number: 86200275.5

(22) Date of filing: **21.02.86**

(51) Int. Cl.⁴: **C08F 4/64** , C08F 10/00

(30) Priority: **23.02.85 NL 8500521**

(43) Date of publication of application:
**03.09.86 Bulletin 86/36**

(84) Designated Contracting States:
**BE DE FR GB IT NL**

(71) Applicant: **STAMICARBON B.V.**
**Mijnweg 1**
**NL-6167 AC Geleen(NL)**

(72) Inventor: **Loontjes, Jacobus Antonius**
**Synagogeplantsoen 76**
**NL-6231 KK Meerssen(NL)**
Inventor: **Muskens, Bernardus Johanna**
**Gansbeek 64**
**NL-6166 JB Geleen(NL)**

(74) Representative: van Golde, Lambertus Maria
Gerardus T. et al
**OCTROOIBUREAU DSM P.O. Box 9**
**NL-6160 MA Geleen(NL)**

(54) **Process for preparing a solid catalytic titanium component and process for polymerizing alkenes-1 while applying such a titanium component.**

(57) The invention relates to a process for preparing a solid catalytic titanium component for polymerizing alkenes-1 and for copolymerizing alkenes-1 with each other and/or with ethylene, in which process a magnesium halide, an aluminum halide and an electron donor compound are mixed and subsequently treated with a titanium halide compound, the process being characterized in that an intimate mixture of a magnesium halide and an aluminum halide is prepared and the resulting magnesium aluminum halide is intimately mixed with an electron donor compound not complexed with a titanium compound and/or an intimate mixture of a magnesium halide, an aluminum halide and an electron donor compound not complexed with a titanium compound is prepared, the resulting mixed product is subsequently washed with a washing liquid in which washing liquid the complex between the relative aluminum halide and the relative electron donor compound is at least partly soluble and the washed product is treated with a liquid titanium halide compound and to a process for polymerizing alkenes-1 and for copolymerizing alkenes-1 with each other or with ethylene while using such a titanium component.

# PROCESS FOR PREPARING A SOLID CATALYTIC TITANIUM COMPONENT AND PROCESS FOR POLYMERIZING ALKENES-1 WHILE APPLYING SUCH A TITANIUM COMPONENT

The invention relates to a process for preparing a solid catalytic titanium component for polymerizing alkenes-1 and for copolymerizing alkenes-1 with each other and/or with ethylene, in which process an electron donor compound, a magnesium halide and an aluminum halide are mixed and subsequently treated with a titanium halide compound, and to a process for polymerizing alkenes-1 and for copolymerizing alkenes-1 with each other or with ethylene while using such a titanium component.

A process as described in the preamble is known from the British patent specification 1 550 708. According to the theory of that patent specification a complex of an electron donor compound and an aluminum halide is produced, this complex is mixed with a magnesium halide and this mixture is treated first with a titanium tetrachloride and subsequently with an inert solvent like n-heptane, upon which the resulting solid substance is separated off and is used as prepared catalytic titanium component.

It has now been found that specifically with such catalytic titanium components for polymerizing alkenes-1 and copolymerizing alkenes-1 with each other and/or with ethylene the properties of the catalyst containing such a catalytic titanium component can be substantially improved with respect to activity and stereospecifity by preparing an intimate mixture of a magnesium halide and an aluminum halide and by intimately mixing the resulting magnesium aluminum halide with an electron donor compound not complexed with a titanium compound and/or by preparing an intimate mixture of a magnesium halide, an aluminum halide and an electron donor compound not complexed with a titanium compound, by subsequently washing the resulting mixed product with a washing liquid in which washing liquid the complex between the relative aluminum halide and the relative electron donor compound is at least partly soluble and by treating the washed product with a liquid titanium halide compound. The expression 'magnesium aluminum halide' is used here in the sense of a combination of a magnesium halide and an aluminum halide as an intimate mixture, co-crystalline compound, complex, solid solution, etc. The magnesium aluminum halide may yet contain other components. An extremely effective manner to prepare this magnesium aluminum halide consists in the dissolution in an organic solvent of a magnesium compound and an aluminum compound and in subsequently so treating this solution with a halogenating agent, such as $Cl_2$ or HCl, that the magnesium aluminum halide is precipitated. Another method to produce the magnesium aluminum halide consists in grinding the ingredients, for instance for at least 5 hours.

The intimate mixing of magnesium aluminum halide with the electron donor compound and/or the intimate mixing of magnesium halide, aluminum halide and electron donor compound can be effected, for instance, by grinding them together, for instance in a ball mill or in a vibration mill, for at least 1 hour.

Although the invention is not bound to any theoretic consideration, it is observed that in the intimate mixing a reaction is assumed to occur between the aluminum halide and the electron donor compound with formation of a complex.

Now the object of the washing step is to remove the complex formed between the aluminum halide/electron donor compound. In the resulting cavities titanium halide compound is subsequently incorporated.

According to the invention a solid catalytic titanium component is prepared for polymerizing alkenes-1 and for copolymerizing alkenes-1 with each other and/or with ethylene, in which process a magnesium halide, an aluminum halide and an electron donor compound are mixed and subsequently treated with a titanium halide compound, the process being characterized in that an intimate mixture of a magnesium halide and an aluminum halide is prepared and the resulting magnesium aluminum halide is intimately mixed with an electron donor compound not complexed with a titanium compound and/or an intimate mixture of a magnesium halide, an aluminum halide and an electron donor compound not complexed with a titanium compound is prepared, the resulting mixture is subsequently washed with a washing liquid in which washing liquid the complex between the relative aluminum halide and the relative electron donor compound is at least partly soluble and the washed product is treated with a liquid titanium halide compound.

In addition to one or more solvents for said complex the washing liquid preferably also contains at least one alcohol, preferably an unsubstituted phenol or a phenol subsituted with one or more halogen groups and/or with one or more alkyl groups and/or alkoxy groups with, for instance, 1-6 carbon atoms per group. Examples of suitable solvents are aliphatic, cycloaliphatic, aromatic and mixed aromatic/aliphatic hydrocarbons with 4-12 carbon atoms per molecule, such as butane, isobutane, n-hexane, n-heptane, cyclohexane, tetralin, decalin, benzene, the xylenes and particularly toluene. Halogenated hydrocarbons can be used also, for instance $CCl_4$ or $C_2Cl_6$. Examples of suitable phenols are the cresols, the methoxyphenols, the xylenols, the ethylphenols, the cumylphenols and the naphthols. Most preference is given to o-cresol. Per g resulting mixed product 1-1000 g, preferably 5-100 g, washing liquid is used and a solvent(s): alcohol(s) weight ratio in the washing liquid in the range of 1:1 to 2000:1, preferably in the range of 2:1 to 200:1. The washing liquid may contain other substances as well, if so desired.

The titanium component obtained by applying the process according to the invention gives the polymerization catalyst a good stereospecificity with a very high activity. Using this catalyst polymers, for instance polypropylene, can be obtained having a very low halogen content and a very low titanium content, so that a washing step after the polymerization can be omitted. Moreover, the polymer has a good particle size and a good particle size distribution. As a result, the polymer can be well processed, showing little corrosiveness in respect of the processing equipment.

The electron donor compound applied may be, for instance, oxygen-containing electron donors, such as alcohols, phenols, ketones, siloxanes, aldehydes, acid halides, carboxylic acids, esters, ethers and acid amides, phosphorus-containing electron donors, such as phosphines, phosphites and phosphates, or nitrogen-containing electron donors, such as amines, nitriles, isocyanates and nitro compounds. For specific examples reference is made again to the British patent publication 2 047 255 A. Preference is given to ethers with 2-20 carbon atoms per molecule, e.g. dimethylether, diethylether, di-n-butylether, di-i-amyl-ether, tetrahydrofuran, anisole or diphenyl ether, and in particular organic esters with 2-40, particularly 2-18, carbon atoms per molecule. The acid component of the ester mostly contains 1-9 carbon atoms per molecule or is a natural fatty acid, while the alcohol component of the ester mostly contains 1-6 carbon atoms per molecule. Examples of suitable esters are methyl formate, cyclohexyl formate, ethyl acetate, vinyl acetate, amyl acetate, 2-ethylhexyl acetate, cyclohexyl acetate, ethyl propionate, amyl propionate, methyl butyrate, ethyl valerate, methyl chloroacetate, ethyl dichloroacetate, methyl methacrylate, ethyl acrylate, n-butyl acrylate, ethyl crotonate, dimethyl maleate, ethyl cyclohexane carboxylate, methyl benzoate, ethyl benzoate, i-butyl benzoate, octyl benzoate, cyclohexyl benzoate, phenyl benzoate, benzyl benzoate, phenyl ethyl benzoate, methyl toluate, ethyl toluate, i-amyl toluate, methyl anisate, ethyl anisate, phthalic acid esters like di-ethyl phthalate, dibutyl phthalate, di-heptyl phthalate, di-allyl phthalate or di-phenyl phthalate, $\gamma$-butyrolacton, $\epsilon$-caprolacton, coumarin, phthalide and ethylene carbonate. Particular preference is given to esters derived from aromatic acids, in particular esters of benzoic acid substituted or not with alkyl or alkoxy groups. Alkyl esters with 1-4 carbon atoms per alkyl group, in particular ethyl or methyl esters of benzoic acid, o-or p-toluene carboxylic acid or p-methoxy benzoic acid are preferred in particular. The electron donor compound is preferably applied in a non-complexed form.

The magnesium aluminum halides, magnesium halides and aluminum halides to be applied must be at least virtually water-free and preferably also at least virtually free from magnesium oxide.

The expressions at least virtually water-free and at least virtually free from magnesium oxide are understood here to mean that the water, respectively magnesium oxide, concentration in the carrier is negligible, as far as water is concerned in any case lower than 0.2 % (wt), preferably 0.1 % (wt) at most, and as far as magnesium oxide is concerned in any case lower than 0.1, preferably 0.01 at most, calculated as mgeq base titrable with dilute strong acid, e.g. 0.1 N hydrochloric acid, per g carrier.

The magnesium aluminum halides, magnesium halides and aluminum halides may further contain minor amounts of other metal ions, for instance sodium, tin, silicon or germanium. The magnesium:aluminum weight ratio in the resulting mixture is preferably in the range of 1:3 to 100:1, in particular in the range of 1:1 to 20:1. The halogen is preferably chlorine, but may for instance also be bromine or iodine or a mixture of halogens.

According to a prefered mode of realizing the process according to the invention a magnesium aluminum halide is applied which has been obtained by converting a combination of an organic aluminum compound and an organic magnesium compound with an halogenating agent having the formula $RX_m$, where R is a hydrocarbon, a hydrogen atom or a halogen atom, X a halogen atom and m a whole number from 1-10. The compound $RX_m$ may be a hydrogen halide, e.g. in the form of the water-free gas, or e.g. an aliphatic halogen compound with e.g. 1-8 carbon atoms per molecule. Preference is given to using a hydrogen halide, or otherwise an alkyl halide. Examples are methyl chloride, methylene chloride, chloroform, ethyl bromide, ethylene dichloride, i-propyl chloride, n-butyl iodide, etc.

The precipitant used may also be a free halogen and an interhalogen compound, e.g. $Cl_2$, $Br_2$, $J_2$, $JCl$, $JCl_3$ or $BrCl$.

The organic aluminum compound preferably contains one or more hydrocarbon groups bonded directly to the metal. The hydrocarbon groups preferably contain 1-10 carbon atoms. Examples are trialkyl or trialkenyl aluminum compounds, for instance triethyl aluminum, tripropyl aluminum, triisobutyl aluminum, triisoprenyl aluminum, trihexyl aluminum and trioctyl aluminum; dialkyl aluminum hydrides, for instance diethyl aluminum hydride or diisobutyl aluminum hydride; dialkyl aluminum halides, in particular a chloride or a bromide, diethyl aluminum chloride and bromide being particularly suitable, while di-n-butyl aluminum chloride or methyl-n-butyl aluminum chloride, for instance, may also be used; and (mono)alkyl aluminum dihalides, for instance ethyl aluminum dichloride, n-butyl aluminum dichloride or n-hexyl aluminum dibromide. If a halogen-containing organic aluminum compound is used, the halogen is preferably the same as that in the halogenating agent used. Trialkyl aluminum compounds are preferred.

The organic magnesium compound may be, for instance, a di-alkyl magnesium or an alkyl magnesium halide. The hydrocarbon groups preferably contain 1-10 carbon atoms again. Examples are ethyl magnesium chloride, n-butyl magnesium chloride, i-propyl magnesium bromide, n-decyl magnesium iodide, ethyl-n-butyl magnesium, di-n-butyl magnesium, di-i-amyl magnesium and di-n-octyl magnesium.

The conversion of the organic metal compounds into the magnesium aluminum halide is effected by precipitation of the magnesium aluminum halide from a solution of the organic metal compounds in a suitable solvent. Examples of suitable solvents are aliphatic, cycloaliphatic, aromatic and mixed aromatic/aliphatic hydrocarbons, with 3-8 carbon atoms per molecule, which are preferably inert under the reaction conditions, for instance butane, i-butane, n-hexane, n-heptane, cyclohexane, benzene, toluene and the xylenes.

Further details regarding this preferred process are described in the British patent publication 2 047 255 A. In the preferred process a particularly important improvement of the catalyst activity at high stereospecificity can be achieved.

The said washing treatment takes place at a temperature of e.g. 250-425 K, preferably 320-380 K. The pressure is not critical and amounts to e.g. 10-1000 kPa. The washing conditions are such that a substantial amount of the aluminum halide/electron donor complex is removed from the mixture.

The washed product is treated with a liquid titanium halide compound. The liquid titanium halide compound may be an undiluted titanium halide compound which is liquid of its own, or a liquid solution of a titanium halide compound in a suitable solvent. The titanium halide compound used may be any titanium halide compound, including compounds in which part of the titanium valencies is used for bonds other than to halogen atoms. The halogen in the titanium halide compound is preferably chlorine, but may also be bromine and/or iodine for instance. The titanium halide compound is preferably derived from tetravalent titanium. Examples are $TiCl_4$, $TiBr_4$, $TiJ_4$ and $Ti(isobutyoxy)_2Cl_2$. Particularly suitable is $TiCl_4$. For use in multistage polymerizations, particularly those in which more than half an hour is normally required for the first polymerization step before a second step is started, the titanium halide phenolates have special advantages. For further details regarding the titanium halide compounds to be applied reference is made for the sake of brevity to the British patent publication 2 047 255 A mentioned earlier. If so desired, a titanium halide compound of trivalent titanium can be used also, for instance $TiCl_3$. The solvents used for the titanium halide compound may be the same as the above-mentioned used in the washing.

The treatment with the liquid titanium halide compound takes place at a temperature of e.g. 250-425 K, preferably 320-380 K. The pressure is not critical and amounts to e.g. 10-1000 kPa. The amount of liquid titanium halide compound, expressed as mmoles Ti per gramme washed product, is e.g. 1-2000 mmoles/g, preferably 10-500 mmoles/g. Amounts larger than 2 moles/g can be used, but offer no advantage.

After this treatment the titanium component is preferably rewashed with an organic solvent. The solvents suitable as such are the same as those mentioned earlier.

The titanium content of the prepared titanium component is usually between 0.1 and 10 % (wt). The titanium:magnesium:aluminum weight ratio is preferably 1:(0.5-20):(0.01-2), more specifically 1:(0.5-10):(0.02-1). The electron donor is present in the titanium component in an amount of, for instance, 0.1 to 5 molecules per titanium atom. A typical example of the composition of the titanium component, although varying in dependence on the circumstances of the catalyst preparation, is 1-10 % (wt) titanium, 16-25 % (wt) magnesium, 0.05-2.0 % (wt) aluminum, 45-65 % (wt) halogen and 1-25 % (wt) of the electron donor.

The titanium compound in the prepared polymerization catalyst is used in combination with an organometallic component derived from a metal from one of the groups I-III of the Periodic System with a hydrocarbon group bonded directly to the metal. Examples are trialkyl aluminum compounds, alkyl aluminum alkoxides, alkyl aluminum hydrides, alkyl aluminum halides, dialkyl zinc compounds and dialkyl magnesium compounds. Of these the organo-aluminum compounds are particularly suitable. Examples of the organo-aluminum compounds are trialkyl or trialkenyl aluminum compounds, for instance triethyl aluminum, tripropyl aluminum, triisobutyl aluminum, tri-isoprenyl aluminum, trihexyl aluminum and trioctyl aluminum; alkyl aluminum compounds in which a number of the aluminum atoms are connected via an oxygen or nitrogen atom, for instance $(C_2H_5)_2AlOAl(C_2H_5)_2$, $(i-C_4H_9)_2AlOAl(i-C_4H_9)_2$ or $(C_2H_5)_2AlNHAl(C_2H_5)_2$; dialkyl aluminum hydrides such as diethyl aluminum hydride or diisobutyl aluminum hydride; dialkyl aluminum halides, in particular a chloride or a bromide, diethyl aluminum chloride and bromide being particularly suitable, while also other dialkyl aluminum halides with preferably 1-10 carbon atoms in the alkyl group, such as for instance di-n-butyl aluminum chloride and methyl-n-butyl aluminum chloride, can be used; and dialkyl aluminum alkoxides or phenoxides, for instance diethyl ethoxy aluminum or diethyl phenoxy aluminum. The trialkyl aluminum compounds deserve most preference.

The organometal compound may also contain a trialkyl aluminum compound as well as a dialkyl aluminum halide or a mixture of a dialkyl magnesium compound and a monoalkyl aluminum dihalide. The alkyl groups of the metal alkyl compounds preferably contain 1-10 carbon atoms each, or are a palmityl or stearyl group.

The organometal component preferably contains a complex of an organic metal compound, in particular a trialkyl aluminum compound, with an ester of an oxygen-containing organic acid. Suitable esters are the same esters as may be used in the titanium component, in particular again the esters of aromatic carboxylic acids. Preferably, part of the organic metal compound, for instance 50-90 %, is present in a non-complex condition.

The Al:Ti atom ratio is generally between 10 and 1000 ; the molecule-atom ratio of Lewis base bonded in total in the catalyst to Ti is in general between 1 and 200.

The process according to the invention is used in particular in stereospecific polymerization of alkenes-1 with 3-6 carbon atoms per molecule, such as propylene, butylene-1, 4-methyl pentene-1 and hexene-1, and in the copolymerization of these alkenes-1 with each other and/or with ethylene. Copolymers with random arrangement of the various monomer units as well as block copolymers can be manufactured. If ethylene is used as a comonomer, it is mostly incorporated in the polymer in minor quantities, for instance 30 % (wt) at most, more in particular between 1 and 15 % (wt). The process according to the invention is of importance in particular for manufacture of isotactic polypropylene, random copolymers of propylene with minor quantities of ethylene and block copolymers from propylene and ethylene. For the manufacture of block copolymers, any desired sequence of monomer addition may be applied.

The circumstances under which the polymerization reaction with the catalytic titanium component according to the invention is carried out do not deviate from those known in the art. The reaction may be carried out in the gas phase or in the presence of a dispersant. The dispersant may be inert or also a monomer in liquid form. Examples of suitable dispersants are aliphatic hydrocarbons with 3-8 carbon atoms per molecule, such as propylene, butylene-1, butane, isobutane, n-hexane, n-heptane, cyclohexane, benzene, toluene and the xylenes.

In the case of polymerization in the liquid phase, it is preferable for the concentration of the titanium component to be set at about 0.001-0.5 mmole, calculated as titanium atom, and the concentration of the organometal compound at about 0.1-0.50 mmole, both per litre of liquid phase.

The polymerization temperature is mostly between 190 and 475 K, preferably between 310 and 375 K. The pressure may be between 100 and 3000 kPa, for instance.

If so desired, it is possible to control the molecular weight of the polymer during the polymerization process, for instance through the presence of hydrogen or another known molecular weight regulator.

The polymerization reaction may be carried out as a batch process or as a continuous process.

The invention will be elucidated by means of the following non-restrictive examples and comparative experiments.

Example I

I.A.1. Catalyst preparation

Into a nitrogen-flushed three-neck flask provided with a mechanical stirrer and a reflux condenser 700 ml of a solution is introduced containing 0.26 mole ethyl butyl magnesium and 0.08 mole triethyl aluminum. A flow of dry HCl gas is introduced, resulting in the formation of a yellowish precipitate. The precipitate is separated off by filtration, washed and dried.

Into a stainless steel ball mill with a capacity of 0.8 l are successively introduced 3,8 g of the magnesium aluminum chloride obtained and 1.34 ml ethyl benzoate (EB). This mixture is ground for 24 hours and thus forms the mixed product.

I.A.2. Treatment mixed product

About 4 g of the mixed product of I.A.1. is suspended in 150 ml of a mixture of toluene and o-cresol, the o-cresol content of which is such that the suspension formed contains 10 molecules o-cresol per molecule EB. The temperature is raised to 353 K and maintained at this level for 2 hours. After this the suspension is filtered off and the solid substance is washed with water-free gasoline at 333 K.

The solid substance is subsequently suspended in 40 g TiCl₄. After the solid substance has been in contact with TiCl₄ for 2 hours at 353 K, the suspension is filtered off and washed with water-free gasoline at 333 K. The titanium component thus obtained is finally dried.

### I. B. Polymerization

To a stainless steel reactor flushed with dry nitrogen and provided with a mechanical stirrer 2.3 l water-free gasoline is supplied. Separately 2.00 mmoles triethyl aluminum, 0.5 mmole diethyl aluminum chloride, 0.5 mmole methyl-p-toluate and 55 mg of the titanium component obtained according to I.A.2. are fed to the reactor. Subsequently propylene is supplied up to a partial pressure of 200 KPa and the temperature of the reactor is brought to 293 K and maintained at this level for 10 minutes. After this prepolymerization the supply of hydrogen and propylene to the reactor is such that partial pressure of respectively 10 and 640 kPa are reached. The temperature of the reactor is brought to and maintained at 353 K. After 2 hours' polymerization the polymer is separated off by centrifugation.

The polymerization activity is 17250 g PP/g titanium component, the soluble polymer content is 4.2 % and the bulk density is 0.34 g/ml.

### Example II

### II.A.1. Catalyst preparation

Into a stainless steel ball mill with a capacity of 0.8 l are succesively introduced 4.9 g of the magnesium aluminum chloride obtained in I.A.1. and 2.58 ml EB. This mixture is ground for 24 hours and thus forms the mixed product.

### II.A.2. Treatment mixed product

About 7 g of the mixed product of II.A.1. is suspended in 150 ml of a mixture of toluene and o-cresol, the o-cresol content of which is such that the suspension formed contains 10 molecules o-cresol per molecule EB. The temperature is raised to 353 K and maintained at this level for 2 hours. After this the suspension is filtered off and the solid substance is washed with water-free gasoline at 333 K.

The solid substance is subsequently suspended in 40 g $TiCl_4$. After the solid substance has been in contact with $TiCl_4$ for 2 hours at 353 K, the suspension is filtered off and washed with water-free gasoline at 333 K. The titanium component thus obtained is finally dried.

### II.B. Polymerization

To a stainless steel reactor flushed with dry nitrogen and provided with a mechanical stirrer 2.3 l water-free gasoline is supplied. Separately 2.00 mmoles triethyl aluminum, 0.5 mmole diethyl aluminum chloride, 0.5 mmole methyl-p-toluate and 59 mg of the titanium component obtained according to II.A.2. are fed to the reactor. The polymerization takes place in the same way as in example I.B. After the polymerization the polymer is separated off again by centrifugation.

The polymerization activity is 14170 g PP/g titanium component, the soluble polymer content is 4.8 % and the bulk density is 0.34 g/ml.

### Example III

### III.A.1. Catalyst preparation

Into a stainless steel ball mill with a capacity of 0.8 l are successively introduced 3.3 g of the magnesium aluminum chloride obtained in I.A.1. and 0.68 ml EB. This mixture is ground for 24 hours and thus forms the mixed product.

### III.A.2. Treatment mixed product

About 4 g of the mixed product of III.A.1. is suspended in 100 ml of a mixture of toluene and o-cresol, the o-cresol content of which is such that the suspension formed contains 10 molecules o-cresol per molecule EB. The temperature is raised to 353 K and maintained at this level for 2 hours. After this the suspension is filtered off and the solid substance is washed with water-free gasoline at 333 K.

The solid substance is subsequently suspended in 40 g $TiCl_4$. After the solid substance has been in contact with $TiCl_4$ for 2 hours at 353 K, the suspension is filtered off and washed with water-free gasoline at 333 K. The titanium component thus obtained is finally dried.

### II.B. Polymerization

To a stainless steel reactor flushed with dry nitrogen and provided with a mechanical stirrer 2.3 l water-free gasoline is supplied. Separately 2.00 mmoles triethyl aluminum, 0.5 mmole diethyl aluminum chloride, 0.5 mmole methyl-p-toluate and 80 mg of the titanium component obtained according to III.A.2. are fed to the reactor. The polymerization takes place in the same way as in example I.B. After the polymerization the polymer is separated off again by centrifugation.

The polymerization activity is 11710 g PP/g titanium component, the soluble polymer content is 5.3 % and the bulk density is 0.35 g/ml.

### Example IV

### IV.A.1. Catalyst preparation

Into a nitrogen-flushed three-neck flask provided with a mechanical stirrer and a reflux condenser 700 ml of a solution is introduced containing 0.26 mole ethyl butyl magnesium and 0.10 mole triethyl aluminum. A flow of dry HCl gas is introduced, resulting in the formation of a yellowish precipitate. The precipiate is separated off by filtration, washed and dried.

Into a stainless steel ball mill with a capacity of 0.8 l are successively introduced 3.9 g of the magnesium aluminum chloride obtained and 1.65 ml EB. This mixture is ground for 26 hours and thus forms the mixed product.

### IV.A.2. Treatment mixed product

About 5 g of the mixed product of IV.A.1. is suspended in 150 ml of a mixture of toluene and o-cresol, the o-cresol content of which is such that the suspension formed contains 10 molecules o-cresol per molecule EB. The temperature is raised to 353 K and maintained at this level for 2 hours. After this the suspension is filtered off and the solid substance is washed with water-free gasoline at 333 K.

The solid substance is subsequently suspended in 40 g TiCl₄. After the solid substance has been in contact with TiCl₄ for 2 hours at 353 K, the suspension is filtered off and washed with water-free gasoline at 333 K. The titanium component thus obtained is finally dried.

IV.B. Polymerization

To a stainless steel reactor flushed with dry nitrogen and provided with a mechanical stirrer 2.3 l water-free gasoline is supplied. Separately 2.00 mmoles triethyl aluminum, 0.5 mmole diethyl aluminum chloride, 0.5 mmole methyl-p-toluate and 72 mg of the titanium component obtained according to IV.A.2. are fed to the reactor. The polymerization takes place in the same way as in example I.B.

After the polymerization the polymer is separated off again by centrifugation.

The polymerization activity is 13760 g PP/g titanium component, the soluble polymer content is 3.5 % and the bulk density is 0.36 g/ml.

Example V

V.A.1. Catalyst preparation

Into a nitrogen-flushed three-neck flask provided with a mechanical stirrer and a reflux condenser 750 ml of a solution is introduced containing 0.26 mole ethyl butyl magnesium and 0.13 mole triethyl aluminum. A flow of dry HCl gas is introduced, resulting in the formation of a yellowish precipitate. The precipiate is separated off by filtration, washed and dried.

Into a stainless steel ball mill with a capacity of 0.8 l are successively introduced 4.4 g of the magnesium aluminum chloride obtained and 2.20 ml EB. This mixture is ground for 26 hours and thus forms the mixed product.

V.A.2. Treatment mixed product

About 6 g of the mixed product of V.A.1. is suspended in 150 ml of the mixture of toluene and o-cresol, the o-cresol content of which is such that the suspension formed contains 10 molecules o-cresol per molecule EB. The temperature is raised to 353 K and maintained at this level for 2 hours. After this the suspension is filtered off and the solid substance is washed with water-free gasoline at 333 K.

The solid substance is subsequently suspended in 40 g TiCl₄. After the solid substance has been in contact with TiCl₄ for 2 hours at 353 K, the suspension is filtered off and washed with water-free gasoline at 333 K. The titanium component thus obtained is finally dried.

V.B. Polymerization

To a stainless steel reactor flushed with dry nitrogen and provided with a mechanical stirrer 2.3 l water-free gasoline is supplied. Separately 2.00 mmoles triethyl aluminum, 0.5 mmole diethyl aluminum chloride, 0.5 mmole methyl-p-toluate and 74 mg of the titanium component obtained according to V.A.2. are fed to the reactor. The polymerization takes place in the same way as in example I.B. After the polymerization the polymer is separated off again by centrifugation.

The polymerization activity is 11630 g PP/g titanium component, the soluble polymer content is 3.5 % and the bulk density is 0.35 g/ml.

Example VI

VI.A.1. Catalyst preparation

Into a nitrogen-flushed three-neck flask provided with a mechanical stirrer and a reflux condenser 700 ml of a solution is introduced containing 0.26 mole ethyl butyl magnesium and 0.08 mol triethyl aluminum per litre. A flow of dry HCl gas is introduced, resulting in the formation of a yellowish precipitate. The precipitate is separated off by filtration, washed and dried.

Into a stainless steel ball mill with a capacity of 0.8 l are successively introduced 4.0 g of the magnesium aluminum chloride obtained and 1.49 ml EB. This mixture is ground for 25 hours and thus forms the mixed product.

VI.A.2. Treatment mixed product

About 4 g of the mixed product of VI.A.1. is suspended in toluene. The temperature is raised to 353 K and maintained at this level for 2 hours. After this the suspension is filtered off and the solid substance is washed with water-free gasoline at 333 K.

The solid substance is subsequently suspended in 40 g TiCl₄. After the solid substance has been in contact with TiCl₄ for 2 hours at 353 K, the suspention is filtered off and washed with water-free gasoline at 333 K. The titanium component thus obtained is finally dried.

VI.B. Polymerization

To a stainless steel reactor flushed with dry nitrogen and provided with a mechanical stirrer 2.3 l water-free benzine is supplied. Separately 2.00 mmoles triethyl aluminum, 0.5 mmole diethyl aluminum chloride, 0.5 mmole methyl-p-toluate and 61 mg of the titanium component obtained according to VI.A.2. are fed to the reactor. The polymerization takes place in the same way as in example I.B. After the polymerization the polymer is separated off again by centrifugation.

The polymerization activity is 9850 g PP/g titanium component, the soluble polymer content is 3.1 % and the bulk density is 0.35 g/ml.

COMPARATIVE EXPERIMENT A

A.A.1. Catalyst preparation

Into a nitrogen-flushed three-neck flask provided with a mechanical stirrer and a reflux condenser 700 ml of a solution is introduced containing 0.26 mole ethyl butyl magnesium and 0.08 mol triethyl aluminum per litre. A flow of dry HCl gas is introduced, resulting in the formation of a yellowish precipitate. The precipitate is separated off by filtration, washed and dried.

Into a stainless steel ball mill with a capacity of 0.8 l are successively introduced 3.2 g of the magnesium aluminum chloride obtained and 1.14 ml EB. This mixture is ground for 17 hours and thus forms the mixed product.

A.A.2. Treatment mixed product

About 3 g of the mixed product of A.A.1. is suspended in 40 g TiCl₄. After the solid substance has been in contact with TiCl₄ for 2 hours at 353 K, the suspension is filtered off and washed with water-free gasoline at 333 K. The titanium component thus obtained is finally dried.

A.B. Polymerization

To a stainless steel reactor flushed with dry nitrogen and provided with a mechanical stirrer 2.3 l water-free gasoline is supplied. Separately 2.00 mmoles triethyl aluminum, 0.5 mmole diethyl aluminum chloride, 0.5 mmole methyl-p-toluate and 61 mg of the titanium component obtained according to A.A.2. are fed to the reactor. The polymerization takes place in the same way as in example I.B. After the polymerization the polymer is separated off again by centrifugation.

The polymerization activity is 12350 g PP/g titanium component, the soluble polymer content is 9.6 % and the bulk density is 0.34 g/ml.

COMPARATIVE EXPERIMENT B

B.A.1. Catalyst preparation

6.5 ml EB dissolved in 75 ml water-free gasoline is added in drops at 273 K to a solution of 5 ml TiCl₄ in 125 ml gasoline. A precipitate is formed of the complex of TiCl₄.EB, which is separated off by filtration, washed and dried.

Into a nitrogen-flushed three-neck flask provided with a mechanical stirrer and a reflux condenser 100 ml of a solution is introduced containing 0.3 mole dibutyl magnesium and 0.1 mol triethyl aluminum per litre. A flow of dry HCl gas is introduced, resulting in the formation of a yellowish precipitate. The precipitate is separated off by filtration, washed and dried.

Into a stainless steel ball mill with a capacity of 0.8 l are successively introduced 2.8 g of the magnesium aluminum chloride obtained and 2.3 g TiCl₄.EB. This mixture is ground for 18 hours.

B. B. Polymerization

To a stainless steel reactor flushed with dry nitrogen and provided with a mechanical stirrer 2.5 l gasoline is supplied. Separately 6.25 mmoles triethyl aluminum, 1.25 mmoles methyl-p-toluate and 0,2 g of the titanium component obtained according to B.A.1. are mixed together in 50 ml gasoline for 5 minutes.

After addition of this suspension to the reactor, propylene is supplied up to partial pressures of respectively 50 and 650 KPa. The temperature of the reactor is brought to 333 K and maintained at this level. After 2 hours' polymerization the polymer is separated off by centrifugation.

The polymerization activity is 4950 g PP/g titanium component, the soluble polymer content is 5.6 % and the bulk density is 0.34 g/ml.

**Claims**

1. Process for preparing a solid catalytic titanium component for polymerizing alkenes-1 and for copolymerizing alkenes-1 with each other and/or with ethylene, in which process a magnesium halide, an aluminum halide and an electron donor compound are mixed and subsequently treated with a titanium halide compound, the process being characterized in that an intimate mixture of a magnesium halide and an aluminum halide is prepared and the resulting magnesium aluminum halide is intimately mixed with an electron donor compound not complexed with a titanium compound and/or an intimate mixture of a magnesium halide, an aluminum halide and an electron donor compound not complexed with a titanium compound is prepared, the resulting mixed product is subsequently washed with a washing liquid in which washing liquid the complex between the relative aluminum halide and the relative electron donor compound is at least partly soluble preferably at a temperature of 250-425 K, more particularly at a temperature of 320-380 K, and the washed product is treated with a liquid titanium halide compound preferably at a temperature of 250-425 K, more particularly at a temperature of 320-380 K.

2. Process according to claim 1, characterized in that the solvent for said complex in the washing liquid contains an aliphatic, cyclo-aliphatic, aromatic or mixed aromatic/aliphatic hydrocarbon with 4-12 carbon atoms per molecule, preferably toluene.

3. Process according to claim 1 or 2, characterized in that, in addition to one or more solvents for said complex, the washing liquid also contains at least one alcohol, preferably a phenol, particularly an o-cresol.

4. Process according to claim 3, characterized in that the applied weight ratio between solvent(s) and alcohol(s) in the washing liquid is in the range of 1:1 to 2000:1, preferably in the range of 2:1 to 200:1.

5. Process according to any one of claims 1-4, characterized in that per g mixed product 1-1000 g, preferably 5-100 g, washing liquid is used.

6. Process according to any one of claims 1-5, characterized in that the washed product is treated with TiCl₄.

7. Process according to any one of claims 1-6, characterized in that the magnesium aluminum halide has been obtained by precipitation of the corresponding metal halide from a solution of the combination of an organic aluminum compound and an organic magnesium compound with a halogenating agent having the formula $RX_m$, where R is a hydrocarbon residue, a hydrogen atom or a halogen atom, X a halogen atom and m a whole number from 1-10.

8. Process according to any one of claims 1-7, characterized in that the magnesium:aluminum weight ratio in the mixture is in the range of 1:3 to 100:1, specifically in the range of 1:1 to 20:1.

9. Process according to any one of claims 1-8, characterized in that the titanium:magnesium:aluminum weight ratio in the prepared titanium component is 1:(0.5-20):(0.01-2), preferably 1:(0.5-10):(0.02-1).

10. Process for polymerizing alkenes-1 and for copolymerizing alkenes-1 with each other and/or with ethylene while applying a catalyst system comprising a solid catalytic titanium component and an organo metal compound derived from a metal from one of the groups I-III of the Periodic System, characterized in that a titanium component is prepared according to the process according to any one of claims 1-9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 093 464 (STAMICARBON) <br> * Whole document * <br> --- | 1 | C 08 F 4/64 <br> C 08 F 10/00 |
| D,A | GB-A-2 047 255 (STAMICARBON) <br> * Whole document * <br> --- | 1 | |
| A | FR-A-2 453 184 (STAMICARBON) <br> * Whole document * <br> ----- | 1 | |

TECHNICAL FIELDS
SEARCHED (Int. Cl.4)

C 08 F

The present search report has been drawn up for all claims

| Place of search | Date of completion of the search | Examiner |
|---|---|---|
| THE HAGUE | 06-05-1986 | DE ROECK R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82